# EUROPEAN PATENT APPLICATION

(11) **EP 4 328 870 A1**
(43) Date of publication of application: **28.02.2024**
(21) Application number: 22191467.4
(22) Date of filing: 22.08.2022
(51) Int. Cl.: G06V 20/59

(54) **METHOD AND SYSTEM FOR DETERMINING OBJECTS IN A COMPARTMENT OF A VEHICLE**

(71) Applicant: Bayerische Motoren Werke Aktiengesellschaft, 80809 München (DE)
(72) Inventor: Zaki, Tarek, 81829 München (DE)

(57) **Abstract**

The invention relates to a method of determining objects (5) in a compartment (2) of a vehicle (1). The method comprises obtaining image data of at least a portion of an inside of the compartment (2) by means of at least one image capturing device (4) provided inside the compartment (2). The method further comprises obtaining occurrence data, the occurrence data relating to a current and/or upcoming occurrence. Furthermore, a correlation between the current and/or upcoming occurrence and at least one object (5) is obtained. The at least one object (5) is determined inside the compartment (2) by processing the image data, wherein the determining includes determining absence or presence of the at least one object (5) inside the compartment (2). A current situation relating to the current and/or upcoming occurrence and the absence or presence of the object (5) in view of the obtained correlation is evaluated. An image (6) corresponding to the image data may be displayed on a display device (7), and a notification may be output.

## Description

The present invention relates to the field of processing data in a vehicle, and more particularly to the field of determining objects inside a compartment of the vehicle using at least one image capturing device provided inside the compartment. Specifically, the invention relates to a method and system for determining objects in a trunk of a vehicle by means of at least one camera provided inside the trunk.

A vehicle, such as a car, may have compartments that are not accessible during driving. In particular, the trunk of a car is typically not accessible during driving. Thus, if a user wants to see what is inside the trunk, they typically need to stop the car, step out of the car, and finally open the trunk. This, however, is not always possible, e.g., on highways, or is at least dangerous. However, there may be situations in which it is desirable to quickly check the content of the trunk, e.g., to check if the user has forgotten something.

Modern cars are equipped with multiple displays, such as the central information display (CID), front-passenger display (FPD), rear-seat displays (RSD) or may be even connected to a personal smartphone or tablet. Attempts have been made to monitor the content of a trunk of a vehicle using the display devices in the vehicle. For instance, systems are known that use one or more cameras inside the trunk to obtain an image. The image may be displayed on a display device in the vehicle. Thus, the driver or any other passenger of the vehicle is able to check the content of the trunk during driving without having to stop and get off the car.

However, an image from the inside of the trunk possibly does not provide additional benefit that would go beyond the mere view of the content of the trunk. Furthermore, the image may not provide sufficient information for a user to check, e.g., if they have forgotten a certain object. For instance, the image may be too small for thorough check during driving. Then, the driver would again have to stop the car and check the trunk manually.

It is an object of the present invention to provide an improved approach for determining objects in a compartment of a vehicle. Specifically, it is desirable to provide an improved method for determining objects in a compartment of a vehicle that provides a user with additional information based on the absence or presence of an object in the compartment of the vehicle.

A solution to this problem is provided by the teaching of the independent claims. Various preferred embodiments of the present invention are provided by the teachings of the dependent claims.

A first aspect of the invention is directed to a, particularly computer-implemented, method of determining objects in a compartment of a vehicle. The method comprises obtaining image data of at least a portion of an inside of the compartment by means of at least one image capturing device provided inside the compartment. The method further comprises obtaining occurrence data, the occurrence data relating to a current and/or upcoming occurrence. Furthermore, a correlation between the current and/or upcoming occurrence and at least one object is obtained. The at least one object is determined inside the compartment by processing the image data, wherein the determining includes determining absence or presence of the at least one object inside the compartment. A current situation relating to the current and/or upcoming occurrence and the absence or presence of the object in view of the obtained correlation is evaluated.

Accordingly, the method may be considered an improved method for determining objects in a compartment, or more generally to observe the inside of the compartment of the vehicle. The method allows for checking whether there is an object in the compartment during driving, which would normally only be possible by stopping the vehicle for a manual check of the compartment.

An additional benefit of the method can be achieved in that an object is correlated with a certain occurrence. By evaluating a current situation, more specifically checking whether a certain object is present or not, in view of a correlation between the object and a current and/or upcoming occurrence, the user may receive valuable advice. For instance, the correlation may indicate that a certain object is obligatory under a certain occurrence, and the method may provide information whether the object is in the compartment or not. For instance, the method may enable a vehicle to forecast if the user has forgotten something depending on a certain occurrence, such as the destination given in the navigation or the weather. So, e.g., if the weather is expected to rain, the vehicle might remind users that they did not take an umbrella with them, or if they are heading to the supermarket, the vehicle may remind them that they forgot shopping boxes. More examples and explanations of occurrences and correlated objects are set forth in more detail below.

The term "vehicle", as used herein, refers particularly to a car, including any type of motor vehicles, hybrid electric vehicles and battery electric vehicles as well as other vehicles like trucks, vans, or busses.

The term "compartment", as used herein, refers particularly to a portion of the vehicle which encloses an inner space of the vehicle. A vehicle may comprise more than one compartment. The compartments may be completely separated or connected to each other. Examples for compartments of a vehicle are a vehicle's trunk and passenger cabin.

The term "trunk", as used herein, refers particularly to a compartment of the vehicle which is intended to carry objects, such as luggage, bags, boxes or any other loose objects (see below). The trunk may have a lid to be closed or may be open. The trunk may be separated from the passenger cabin and may, thus, not be accessible from the passenger cabin of the vehicle. It is typically located at the rear end of the vehicle but may also be located in the front. Alternatively, the trunk may be connected to the passenger cabin, e.g., in a van or utility vehicle. While the trunk could be accessible by a passenger on the rear bench in some cases, it is typically not accessible by the driver during driving. In such vehicle configurations, the trunk may have a cover to separate it from the passenger cabin. It will be appreciated that features described herein for a trunk may also apply to any compartment of a vehicle unless otherwise stated or technically not possible.

The term "object", as used herein, refers particularly to any object or item which is not part of the vehicle but which may be placed inside the vehicle, specifically in a compartment of the vehicle, such as the trunk or the passenger cabin. The object is particularly a loose and mobile object and is sized to fit into the compartment of the vehicle. The object may be, e.g., a jacket, umbrella, bag, handbag, backpack, luggage, suitcase, shopping box, basket, blanket, shoes, sports equipment (yoga mat, tennis racket, ball, etc.), fire extinguisher, bottle, or the like.

The term "image capturing device", as used herein refers particularly to a camera, particularly digital camera. The camera may capture still images (i.e., photos) or moving images (i.e., videos). The camera may be a wide-angle camera, such as a fisheye camera. The image capturing device captures an image and outputs respective image data.

The term "occurrence data", as used herein, refers particularly to at least one current, upcoming, and/or forecasted occurrence that does not directly relate to vehicle data. Rather, the occurrence data may relate to the current circumstances under which the vehicle is operated, a current, upcoming and/or forecasted condition or situation, a current or upcoming event or appointment, etc. The occurrence data, and thus the "current and/or upcoming occurrence", may particularly relate to, e.g., navigation information, destination of a current trip, (current and/or forecasted) weather, day and time (including also, e.g., weekday, daytime), calendar information (such as upcoming events, appointments or the like), etc. Specifically, the upcoming or forecasted occurrences may occur during a planned trip, or more specifically until it is planned or forecasted to return to a current location.

The term "correlation", as used herein, refers particularly to a relationship between a current or upcoming occurrence and at least one object. In other words, the object is correlated with the occurrence. The correlation may result from empirical data, specifically also correlated with a specific user, or from typical situation. For instance, an umbrella may be correlated with rainy weather, a shopping box may be correlated with a supermarket (or address of the supermarket), a certain sports equipment may be correlated with a certain sports class (defined, e.g., by a specific day and time or address of a sports club), etc. Likewise, a certain user may typically carry a certain object. A correlation may also define a relationship between the absence of an object (or objects) and a certain occurrence. For instance, if a user drives to a certain address for picking up something, or to a store (e.g., furniture store or hardware store) to buy something of a certain size, the trunk of the vehicle should provide enough empty space (or should be totally empty).

The term "current situation", as used herein, refers particularly to a current and/or upcoming occurrence along with the actual presence or absence of objects in a compartment of the vehicle.

If applicable, the terms "first", "second", "third" and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Where the term "comprising" or "including" is used in the present description and claims, it does not exclude other elements or steps. Where an indefinite or definite article is used when referring to a singular noun e.g., "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In the following, preferred embodiments of the method are described, which can be arbitrarily combined with each other or with other aspects of the present invention, unless such combination is explicitly excluded or technically impossible.

In some embodiments, the at least one compartment comprises a trunk of the vehicle, wherein at least one image capturing device is provided inside the trunk to obtain image data of the inside of the trunk. The trunk is typically not accessible during driving as already set forth above. Thus, the method may be particularly advantageous for a trunk. Also, the trunk is typically the compartment of the vehicle for carrying objects, such as bags, luggage, sports equipment, or the like.

It will be appreciated that at least one light source may be provided for capturing an image by means of the image capturing device. Specifically, a trunk that is separate from the passenger cabin is dark when closed such that a light source would be needed for capturing an image. The light source may emit visible light. It may also be possible to have an infrared light source along with appropriate image capturing devices. This could allow, e.g., for checking the temperature of an object, which may also allow for detecting covered objects, such as objects inside a bag. It may also be envisioned to provide a suitable image capturing device (and light source) that is configured to detect covered objects, such as objects inside a bag, e.g., using x-ray or the like.

In some embodiments, a plurality of image capturing devices is provided inside the compartment, wherein each of the image capturing devices obtains image data of a respective portion of the inside of the compartment, wherein the image data from the plurality of image capturing devices are combined to obtain image data of a consolidated image of the inside of the compartment. More specifically, providing a plurality of image capturing devices may provide a better or even full view of the inside of the compartment compared to, e.g., a single image capturing device. For instance, the view of an image capturing device may be blocked, or one object may block the view on another object. Thus, the image capturing devices may be distributed over the inside of the compartment. In order to generate a single view of the inside of the compartment, it is preferable to combine the image data from the plurality of image capturing devices, which may include overlapping the image data.

In some embodiments, the method further comprises displaying an image of the inside of the compartment corresponding to the obtained image data on at least one display device. This allows a user, such as the driver of the vehicle to check or cross-check the content of the compartment, particularly the trunk of the vehicle. The image may be particularly a live image from the inside of the compartment, such as the trunk.

In some related embodiments, the display device is mounted inside the vehicle such that it is accessible or can be seen by a user of the vehicle, such as a driver of the vehicle and/or one or more passengers of the vehicle. As described above, modern vehicles are typically equipped with display devices. These display devices may be used to display an image of the inside of the compartment, specifically the inside of the trunk, and provide an easy way for a user to check the content of the trunk during driving.

In some embodiments, the method further comprises transmitting, preferably wirelessly transmitting, the obtained image data to a remote device, and displaying an image of the inside of the compartment corresponding to the obtained image data on the remote device. The remote device may be a mobile device, such as a smartphone or the like. This may allow a user to check the content of, e.g., the trunk from outside the vehicle. For instance, a user could check the trunk from home, while the vehicle is parked, e.g., in the garage. This may be beneficial in situations in which the user is looking for an object, such as a bag or purse, and is not sure whether this object was left behind in the car. The user can simply retrieve an image from the inside of the vehicle's trunk without having to go outside to the parked vehicle.

In some embodiments, the method further comprises, in case of presence of an object, processing the image data to identify the determined object from the image data. More specifically, the object may be classified, where state-of-the-art labelling algorithms may be used for classification of the object (or objects). In other words, categories of the objects inside the trunk can be identified. Identification, i.e., classification of the objects may provide an additional advantage because the method does not only provide an image of the inside of the trunk but also labels the objects. Label examples could be: jacket, umbrella, handbag, backpack, luggage, suitcase, shopping box, basket, blanket, shoes, sports equipment (yoga mat, tennis racket, ball, etc.), fire extinguisher, bottle, or the like. A label may also refer to the absence or presence of any objects. For instance, a label can be, e.g., the filled capacity of the compartment (particularly trunk), such as "empty", "half full", or "full".

In some embodiments, the method further comprises identifying a user of the vehicle, wherein the correlation includes a correlation between the identified user, the current and/or upcoming occurrence and the object, and the current situation relates to the identified user, the current and/or upcoming occurrence and the absence or presence of the object. The user may be a driver of the vehicle and/or any other passenger of the vehicle. The user may be identified using known techniques, e.g., by means of face recognition or simply from the key the driver uses. Identifying a user may allow for even more sophisticated benefit from the method. For instance, there may be a correlation between a certain object under a certain occurrence for a certain user. For instance, a certain user may regularly take a laptop bag to work, i.e., when driving to the work address and possibly at a certain time. The method may then determine, e.g., if the user has forgotten the laptop bag when driving to work.

In some embodiments, the method further comprises establishing a correlation between the object and at least one of the current and/or upcoming occurrence and the user of the vehicle. More specifically, the establishing may comprise a learning process, particularly a machine learning of the correlations. For instance, the correlation may be learned from recurring events. In view of the aforementioned example, the method may, e.g., learn that a specific user regularly takes a specific object at a specific day and time with him, such as the laptop bag to work as set forth above. Other examples may be that a specific user has a regular sports class, where the user X typically takes a certain sports equipment, or that another user Y typically takes a shopping box to the supermarket.

In some embodiments, in case of absence of an object, evaluating the current situation in view of the correlation determines an inconsistency between the current situation and the correlation. This may be particularly advantageous in case a certain object cannot be found or identified by the method. There is a high likelihood that this would mean that the user has forgotten the specific item. The user can cross-check the content of the trunk, e.g., by requesting an image of the inside of the trunk to be displayed on a display device of a vehicle.

In some related embodiments, the method further comprises outputting a notification that expresses the inconsistency. Rather than only displaying an image, outputting a notification may provide specific benefit for a user even without having to display an image of the inside of the trunk. For instance, referring to the examples set forth above, the method may determine an inconsistency, e.g., because a laptop bag cannot be found while the user wants to drive to work. A notification can be output, e.g., "Did you forget your laptop bag?" or "Your laptop bag cannot be found. Please check the trunk." Such notification may remind a user about a forgotten object and the user may get it before heading to the target destination. Also, the user may check the trunk in reaction to such notification, either manually or by requesting a view to the inside of the trunk, which would cause the vehicle to activate the image capturing devices (and light sources) inside the trunk and display an image of the inside of the trunk.

In some embodiments, obtaining the occurrence data comprises obtaining data from at least one of a vehicle sensor, an in-vehicle application, and mobile application. In this way, the occurrence data may obtained automatically. For instance, the system may be connected to the navigation system to retrieve navigation data, particularly a destination, which may be correlated with one or more specific objects. Here, specific locations, such as a mall, office or the like may be associated with the respective postal address, which would typically be entered into a navigation system. Further, weather data may be retrieved from an external temperature sensor or external rain determinator of the vehicle, or an in-car weather app. Date and time may be retrieved from the vehicle's clock (and calendar). The system may also be connected to a calendar app to retrieve forecasted data over the day, e.g., an appointment later that day or the like, or even over several days, e.g., if a longer trip is planned. The mobile application may be executed on a personal device, particularly a mobile device, such as a smart phone, that is connected to the vehicle, either wired or wirelessly.

In some embodiments, the at least one compartment comprises a passenger cabin of the vehicle, wherein at least one image capturing device is provided inside the passenger cabin to obtain image data of the inside of the passenger cabin. While the method may be particularly advantageous for a trunk of a vehicle, it may also be desirable to determine objects inside the passenger cabin. Specifically, a rear bench or floor of a vehicle is hardly accessible by the driver during driving, and it may be of interest whether a certain object is somewhere in the passenger cabin. Furthermore, in case an object correlated with a certain occurrence (and possibly driver or any other passenger of the vehicle) is not found in the trunk, it could be located in the passenger cabin. In this case, it would be desirable that no notification about a forgotten item is output. For instance, rather than putting their laptop bag in the trunk, a user may decide to put the laptop bag on the rear bench. The method would then determine that no laptop bag is in the trunk, but nevertheless, the laptop bag is in the vehicle and no warning or notification is necessary. Thus, it may be beneficial to have image capturing devices not only in the trunk but also in the passenger cabin.

In some embodiments, the method is triggered by means of voice control. A voice command may be received from a user, wherein the voice command may refer to an object to be determined. In this way, an easy option is provided for a user to check whether a certain object is actually in the vehicle, or in other words, whether the user has forgotten a certain object. For instance, the user may simply ask the vehicle, whether a certain object is in the trunk.

In some embodiments, the method further comprises comparing the determined object with previously determined objects. In this way, it may be possible to determine whether a certain object has been in the vehicle (or in the compartment of the vehicle) for at least a predetermined period of time. The method may then output a notification reminding a user about the presence of the object, and possibly recommending removing the object that has been inside the vehicle for a long time. It will be appreciated that the method may then store determined objects, preferably with a respective timestamp. For instance, a certain object should be removed from the vehicle because it is no longer needed, or to save space and weight, which may result in saving fuel. In this context, it may also be envisioned to determine changes in an object that has been inside the vehicle for a predetermined period of time, and to output a notification of the change. This may be useful, e.g., for detecting rotten fruit, a pet's blanket getting dirty, or the like.

A second aspect of the present invention is directed to a data processing system being configured to perform the method of the first aspect. The data processing system might specifically be configured by means of one or more computer programs to perform the method of the first aspect. In addition, or alternatively, the configuration may be implemented, in whole or in parts by respective hardware. Specifically, the system may comprise at least one image capturing device as well as an evaluation unit and a control unit. The image capturing device may be controlled by the control unit and may be configured to capture an image of an inside of the compartment and to output image data corresponding to the captured image. The evaluation unit may be configured to receive and process the image data to evaluate a current situation relating to a current and/or upcoming occurrence and the absence or presence of the object in view of a correlation.

A third aspect of the present invention is directed to a computer program or a computer program product, comprising instructions, which when executed on a data processing system according to the second aspect of the invention cause the system to perform the method according to the first aspect of the invention.

The computer program (product) may in particular be implemented in the form of a data carrier on which one or more programs for performing the method are stored. Preferably, this is a data carrier, such as a CD, a DVD or other optical medium, or a flash memory module. This may be advantageous, if the computer program product is meant to be traded as an individual product independent from the processor platform on which the one or more programs are to be executed. In another implementation, the computer program product is provided as a file on a data processing unit, in particular on a server, and can be downloaded via a data connection, e.g., the internet or a dedicated data connection, such as a proprietary or local area network.

The system of the second aspect may accordingly have a program memory in which the computer program is stored. Alternatively, the system may also be set up to access a computer program available externally, for example on one or more servers or other data processing units, via a communication link, in particular to exchange with it data used during the course of the execution of the computer program or representing outputs of the computer program.

The explanations, embodiments and advantages described above in connection with the method of the first aspect similarly apply to the other aspects of the invention.

### BRIEF DESCRIPTION OF THE DRAWINGS

Further advantages, features and applications of the present invention are provided in the following detailed description and the appended figures, wherein:
**Fig. 1** schematically illustrates an exemplary embodiment of a method according to the present invention;
**Fig. 2** schematically illustrates a trunk of a vehicle; and
**Fig. 3** shows a schematic illustration of combining multiple images.

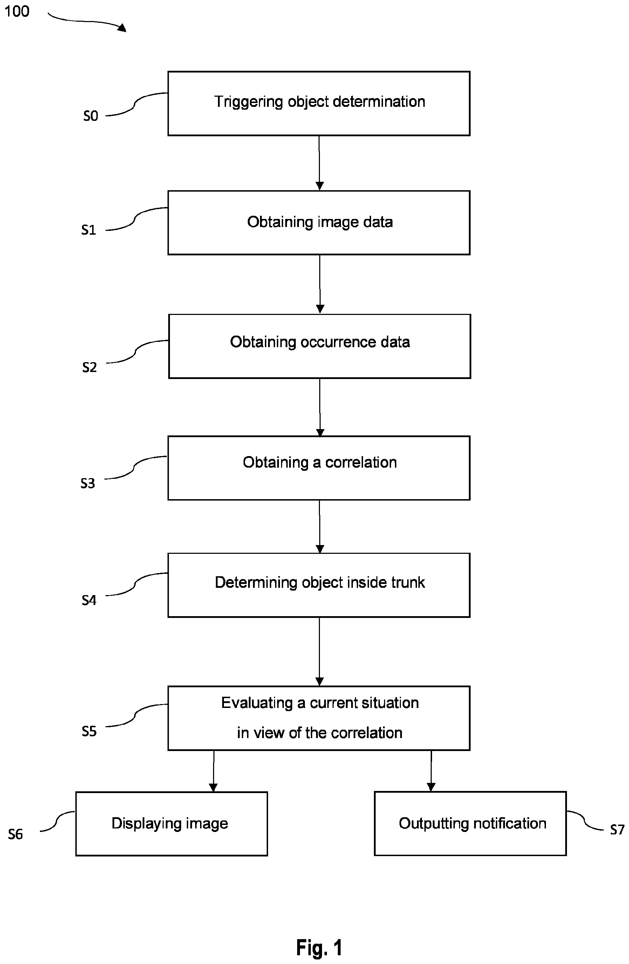

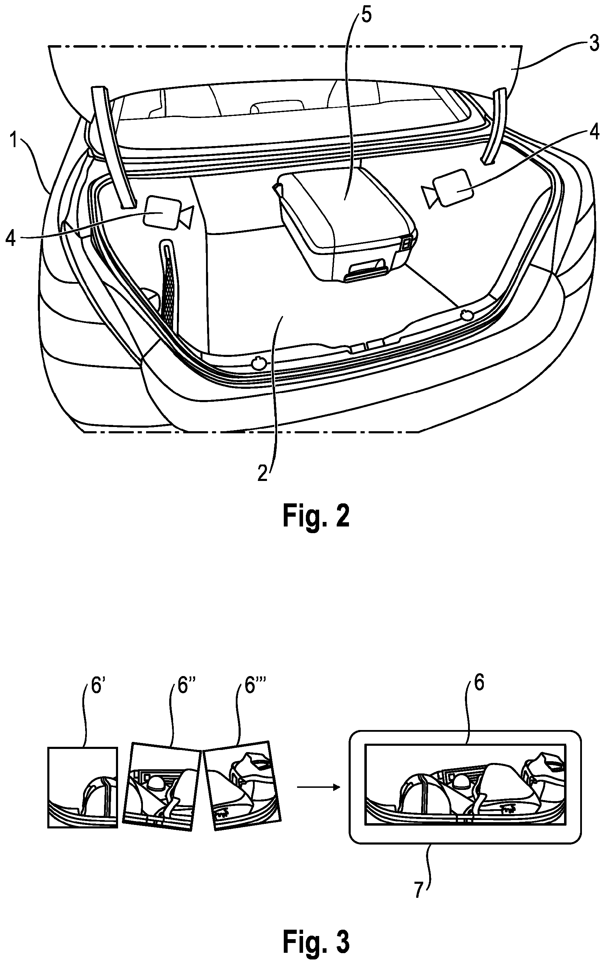

Referring to **Fig. 1** an exemplary embodiment 100 of a method of the first aspect of the present invention is illustrated. The method is described by way of example referring to the trunk of a vehicle. **Fig. 2** illustrates a trunk 2 of a vehicle 1 with its lid 3 in an open position. In this example, two cameras 4 are mounted inside the vehicle. It will be appreciated that a suitable light source or multiple light sources (not illustrated) are provided as well. An exemplary object 5 (suitcase) is placed inside the trunk 2.

At step S0, the method 100 for determining an object inside a compartment of the vehicle 1, such as the trunk 2 of the vehicle is triggered. The method 100 may be triggered upon user input, i.e., the user may for instance operate a respective function in the infotainment system of the vehicle. This allows a user to check the content of the trunk 2 anytime. Also, the method may be triggered using voice control. For instance, the user may ask the vehicle 1 if a certain object is in the trunk. It may also be possible to trigger execution of the method 100 once the vehicle 1 is started. This may be preferred to notify a user about a potentially forgotten object before starting a trip.

In a step S1, image data are obtained from the inside of the trunk 2 by means of the cameras 4. Multiple cameras 4 may be necessary to capture a wide side-to-side image 6 as shown in **Fig. 3****.** The cameras may be wide-angle cameras, such as fisheye cameras. For example, two cameras 4 may be provided, or three as indicated in Fig. 3. More cameras may be provided in order to achieve a full view of the inside of the trunk 2. To deliver a comprehensive view to the car occupants, the different images (e.g., images 6', 6", 6‴ as shown in Fig. 3) may be overlapped and combined to get a consolidated image 6.

In a step S2 occurrence data may be obtained. It will be understood that the order of steps S1 and S2 may be arbitrarily chosen, or the steps S1 and S2 may be even executed at the same time. The occurrence data describe a current and/or upcoming occurrence. This may include, e.g., a destination of the trip, weather or day and time. The system may be connected to at least one of the navigation system, an external temperature sensor, an external rain determinator, a clock, or an app, such as a weather app or calendar app, to retrieve the respective occurrence data. Connected apps may be in-vehicle apps and/or apps on a wired or wirelessly connected personal device.

A correlation between the current and/or upcoming occurrence and at least one object is obtained in step S3. There may be predefined correlations. For instance, the occurrence "rainy weather" can be correlated with the object "umbrella". Also, the correlation can be learned from behavior of a user using smart AI algorithms. For instance, the system can learn what the user is regularly taking in combination with a certain destination. For example, a certain user may always take a laptop bag when going to work. For this purpose, it may be preferred that the method also identifies a user of the vehicle, such as the driver and/or passengers of the vehicle.

In step S4, objects are determined inside the trunk 2 by processing the captured image. First, the method may determine absence or presence of an object, i.e., determine whether there is an object inside the trunk 2 at all. Then, the object can be classified by a suitable classifier. If an object is found and classified, this can be used as an input for further machine learning of a correlation of the identified object with a current and/or upcoming occurrence and possibly an identified user. The method can thereby learn from regular behavior of a user. Referring to the above-described example, the method is thus able to check if a regularly-taken laptop bag is indeed in the trunk. This check may be done, e.g., when the system determines that it is Monday morning at 8:00 and the user is likely going to work.

In step S5 the current situation is evaluated in view of the correlation. The current situation describes a current and/or upcoming occurrence along with the actual absence or presence of objects 5 inside the trunk 2. The evaluation may result in an inconsistency. For instance, the method may determine that there is no umbrella in the trunk, but it is raining. In case of such inconsistency, a notification may be output (step S7), informing the user, e.g., about a missing object, or recommending a certain action, e.g., to check the trunk 2. The image 6 of the inside of the trunk 2 may be displayed (step S6), either automatically or upon request. The image 6 may be displayed on a display device 7 in the vehicle 1 as indicated in Fig. 3. It may also be envisioned to transmit the image data to a smartphone of a user such that the user can check the trunk from outside the vehicle 1.

The method 100 may be beneficial for a user in the following exemplary situations. If the weather is expected to rain, the user can be asked if he/she has forgotten the umbrella, particularly if it is not found inside the trunk. If the destination in the navigation system is the airport, the user can be asked if he/she has forgotten the luggage if not found inside the trunk. If the destination is the supermarket, it may be checked if the user has the necessary carrying box in the trunk or the user can be informed if the trunk is full and there is no place for any extra stuff that will potentially be bought at the supermarket. If the destination is a furniture shop, it may be checked if the trunk is empty and the user can be notified if not.

While above at least one exemplary embodiment of the present invention has been described, it has to be noted that a great number of variations thereto exists. Furthermore, it is appreciated that the described exemplary embodiments only illustrate nonlimiting examples of how the present invention can be implemented and that it is not intended to limit the scope, the application or the configuration of the herein-described apparatuses and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 100: exemplary embodiment of a method of determining objects in a trunk of a vehicle
- 1: vehicle
- 2: trunk
- 3: lid of the trunk
- 4: camera
- 5: object
- 6: image
- 7: display device

## Claims

1. A method (100) of determining objects (5) in a compartment (2) of a vehicle (1), the method comprising:
- obtaining image data of at least a portion of an inside of the compartment (2) by means of at least one image capturing device (4) provided inside the compartment (2);
- obtaining occurrence data, the occurrence data relating to at least one current and/or upcoming occurrence;
- obtaining a correlation between the current and/or upcoming occurrence and at least one object (5);
- determining the at least one object (5) inside the compartment (2) by processing the image data, the determining including determining absence or presence of the at least one object (5) inside the compartment (2);
- evaluating a current situation relating to the current and/or upcoming occurrence and the absence or presence of the object (5) in view of the correlation.

2. The method of claim 1, wherein the at least one compartment comprises a trunk (2) of the vehicle (1), wherein at least one image capturing device (4) is provided inside the trunk (2) to obtain image data of the inside of the trunk (2).

3. The method of claim 1 or 2, wherein a plurality of image capturing devices (4) is provided inside the compartment (2), wherein each of the image capturing devices (4) obtains image data of a respective portion of the inside of the compartment (2), wherein the image data from the plurality of image capturing devices (4) are combined to obtain image data of a consolidated image (6) of the inside of the compartment (2).

4. The method of any one of the preceding claims, the method further comprising displaying an image (6) of the inside of the compartment (2) corresponding to the obtained image data on at least one display device (7).

5. The method of claim 4, wherein the display device (7) is mounted inside the vehicle (1) such that it is accessible by a user of the vehicle.

6. The method of any one of the preceding claims, further comprising transmitting the obtained image data to a remote device, and displaying an image of the inside of the compartment corresponding to the obtained image data on the remote device.

7. The method of any one of the preceding claims, further comprising, in case of presence of an object (5), processing the image data to identify the determined object (5) from the image data.

8. The method of any one of the preceding claims, further comprising identifying at least one user of the vehicle (1), wherein the correlation includes a correlation between the identified user, the current and/or upcoming occurrence and the object (5), and the current situation relates to the identified user, the current and/or upcoming occurrence and the absence or presence of the object (5).

9. The method of claim 7 or 8, further comprising establishing a correlation between the object (5) and at least one of the current and/or upcoming occurrence and the user.

10. The method of any one of the claims, wherein, in case of absence of an object (5), evaluating the current situation in view of the correlation determines an inconsistency between the current situation and the correlation.

11. The method of claim 10, further comprising outputting a notification that expresses the inconsistency.

12. The method of any one of the preceding claims, wherein obtaining the occurrence data comprises obtaining data from at least one of a vehicle sensor, an in-vehicle application, and mobile application.

13. The method of any one of the preceding claims, wherein the at least one compartment comprises a passenger cabin of the vehicle, wherein at least one image capturing device is provided inside the passenger cabin to obtain image data of the inside of the passenger cabin.

14. The method of any one of the preceding claims, wherein the method is triggered by means of voice control, wherein a voice command is received, the voice command referring to an object to be determined.

15. The method of any one of the preceding claims, further comprising comparing the determined object (5) with previously determined objects (5).

16. A data processing system for determining objects (5) in at least one compartment (2) of a vehicle (1), the system being configured to perform the method (100) of any one of claims 1 to 15.

17. A computer program or a computer program product, comprising instructions, which when executed on one or more processors of a system according to claim 16 cause the system to perform the method (100) according to any one of claims 1 to 15.
